# EUROPÄISCHE PATENTSCHRIFT

(11) **EP 3 232 023 B1**
(45) Veröffentlichungstag und Bekanntmachung des Hinweises auf die Patenterteilung: **25.11.2020**
(21) Anmeldenummer: 17152391.3
(22) Anmeldetag: 20.01.2017
(51) Int. Cl.: F01K 25/08

(54) **VERFAHREN UND ANLAGE ZUR ENERGIEUMWANDLUNG VON DRUCKENERGIE IN ELEKTRISCHE ENERGIE**
METHOD AND INSTALLATION FOR ENERGY CONVERSION OF PRESSURE ENERGY TO ELECTRICAL ENERGY
PROCÉDÉ ET INSTALLATION DE CONVERSION D'ÉNERGIE DE PRESSION EN ÉNERGIE ÉLECTRIQUE

(30) Priorität: 12.04.2016 DE 102016106733
(43) Veröffentlichungstag der Anmeldung: 18.10.2017
(73) Patentinhaber: ATLAS COPCO ENERGAS GMBH, 50999 Köln (DE)
(72) Erfinder: RUBYCZ, Rasmus, 51105 Köln (DE); WALTER, Eduard, 42107 Wuppertal (DE)
(74) Vertreter: Lorenz, Bernd Ingo Thaddeus

(56) Entgegenhaltungen:
- DE-A1-102012 220 188
- US-A- 4 942 736

## Beschreibung

Die Erfindung betrifft ein Verfahren zur Energieumwandlung von Druckenergie in elektrische Energie mit einer Expansionsturbine, wobei ein unter Druck stehendes gasförmiges erstes Medium vor der Zuleitung in die Expansionsturbine aufgeheizt wird und die Expansionsturbine einen Generator antreibt. Gegenstand der Erfindung ist auch eine Expansionsturbinenanlage zur Durchführung des Verfahrens.

Im Rahmen einer zunehmenden Effizienzsteigerung bei verfahrens- oder energietechnischen Anlagen besteht vermehrt der Bedarf, die hohe Druckenergie anfallender Prozessgase auszunutzen, um hiermit beispielsweise Generatoren zur Erzeugung elektrischer Energie zu betreiben. Hierzu wird das Prozessgas einer Expansionsturbine bzw. einem Expander zugeführt, der den Druck kontrolliert abbaut und in mechanische Energie in Form von Rotationsenergie umwandelt.

Infolge des Druckabbaus kühlt sich das Prozessgas durch den sogenannten Joule-Thomson-Effekt stark ab. Hierbei kann es insbesondere bei der Verwendung von Prozessgasen mit einem gewissen Restfeuchteanteil, beispielsweise feuchte Luft oder Erdgas, bei Unterschreitung einer Grenztemperatur, beispielsweise bei Wasser von T = 0 °C, zur Bildung von Eiskristallen kommen. Aufgrund der relativ hohen Strömungsgeschwindigkeiten in einer Expansionsturbine können die in der Strömung mitbewegten Eiskristalle zu erheblichen Beschädigungen führen, so dass eine Eisbildung bereits im Vorfeld ausgeschlossen werden sollte.

Besonders bewährt hat sich hierbei ein Verfahren, wobei das Prozessgas vor der Zuführung in die Expansionsturbine derart aufgeheizt wird, dass im Zuge der Entspannung eine untere Grenztemperatur, bei der sich Eiskristalle bilden können, nicht unterschritten wird. Als Wärmequelle für den Aufheizprozess wird hauptsächlich das heiße Abgas von Verbrennungssystem genutzt.

Beispielsweise beschreibt die DE 101 55 508 A1 ein Verfahren, bei dem unter Druck stehendes Erdgas vor der Entspannung in einer Expansionsturbine durch einen Teilstrom des Wasser-Dampf-Kreislaufes erwärmt wird, der zuvor in einem von den heißen Abgasen einer Gasturbine betriebenen Abhitzekessel erhitzt wurde.

Bei der EP 0 670 957 B1 wird die für den Aufheizprozess erforderliche Wärme über ein Blockheizkraftwerk, bestehend aus einem Gas-Verbrennungsmotor und einem Generator zur Stromerzeugung, bezogen.

Die Problematik bei den bisher eingesetzten Verfahren liegt allerdings darin, dass eine Aufheizung der Prozessgase immer nur unter dem Einsatz von Verbrennungsprozessen erfolgen kann. Dieses Verfahren ist folglich sowohl in ökologischer als auch in ökonomischer Hinsicht nicht besonders effizient. Dabei ist auch von Nachteil, dass durch eine klassische Gasverbrennung auch zusätzliche Treibhausgase imitiert werden. Bei den DE 10 2012 220 188 A1 und US 4,942,736 werden ähnliche Verfahren beschrieben.

Der Erfindung liegt daher die Aufgabe zugrunde, ein Verfahren und eine Vorrichtung zur Durchführung des Verfahrens bereitzustellen, bei welchen die Effizienz und insbesondere der gesamte Wirkungsgrad verbessert werden können.

Gegenstand und Lösung der Aufgabe ist ein Verfahren zur Energieumwandlung von Druckenergie in elektrische Energie gemäß dem Patentanspruch 1 sowie eine Expansionsturbinenanlage gemäß Patentanspruch 9.

Hierzu lehrt die Erfindung, dass bei einem Verfahren der eingangs beschriebenen Art die Expansionsturbine zusätzlich zu dem Generator einen Verdichter antreibt, wobei durch den Verdichter in eine Heizanordnung zumindest ein gasförmiges zweites Medium komprimiert wird und die im Zuge der Kompression entstandene Wärme zur Aufheizung des gasförmigen ersten Mediums verwendet wird. Hierbei macht man sich den Umstand zu Nutze, dass sich im Gegensatz zu einer Expansionsturbine bei einer Verdichtung eines Mediums die Temperatur erhöht.

Das heiße Medium kann anschließend beispielsweise direkt einem Eingangswärmetauscher zugeführt werden, wodurch eine Energieübertragung an das erste Medium erfolgt. Die Heizanordnung weist einen geschlossenen thermodynamischen Kreislauf mit einem Medium auf, das zunächst in einem zumindest teilweise flüssigen Aggregatzustand in einem Tank gelagert wird und unter Einwirkung von äußerer Energie verdampft. Hierdurch kann auf besonders vorteilhafte Weise die Verdampfungsenergie besonders effizient in dem Kreislauf genutzt werden. Die äußere Energie kann beispielsweise über Solarthermie, Geothermie oder andere thermische Prozesse bereitgestellt werden.

Erfindungsgemäß kann auf die Verbrennung fossiler Brennstoffe oder auch eine anderweitige Energiezufuhr verzichtet werden, wobei - wie nachfolgend noch im Detail beschrieben - vorzugsweise nach einem Wärmetauscherprinzip zusätzlich zu der Druckenergie auch Umgebungswärme zugeführt wird. Es ergibt sich auch der Vorteil, dass eine das durch erfindungsgemäße Verfahren bzw. eine zur Durchführung des Verfahrens vorgesehene Expansionsturbinenanlage autark betrieben werden kann, wobei lediglich das Medium als Druckgas und nach der Expansion abzuführen ist und die gewonnene elektrische Energie genutzt bzw. abgeführt wird.

Als erstes Medium, welches zur energetischen Verwertung entspannt wird, kann es sich beispielsweise um Erdgas oder Druckluft handeln. Beispielsweise liegt nach einem Transport verdampftes flüssiges Erdgas (LNG) häufig bei hohen Drücken, jedoch relativ niedrigen Temperaturen vor, wobei im Rahmen der Erfindung die Druckenergie oder Einspeisung in ein Ferngasnetz oder einer anderweitigen Nutzung in elektrische Energie umgewandelt werden soll. Im Rahmen der Erfindung können aber auch andere, beliebige Medien, wie beispielsweise Druckluft eingesetzt werden.

Das zweite Medium soll einen effektiven Wärmeaustausch ermöglichen, wobei vorzugsweise auch die Wärmekapazität bei einem Verdampfen bzw. bei einem Kondensieren ausgenutzt werden sollen. Im Rahmen der Erfindung ist als zweites Medium beispielsweise Propan geeignet.

Besonders bevorzugt ist eine Ausgestaltung, bei der das zweite Medium und die verfahrenstechnischen Drücke derart ausgewählt werden, dass die Verdampfungstemperatur des zweiten Mediums unterhalb der Umgebungstemperatur liegt. Hierzu wird die Umgebungstemperatur vorab gemessen und bestimmt. Durch die Temperaturdifferenz zwischen der Umgebung und dem zweiten Medium erfolgt ein Wärmestrom aus der Umgebung in das zweite Medium, wodurch bei entsprechender konstruktiver Ausgestaltung der Wärmetauscheranordnung eine vorzugsweise vollständige Verdampfung des noch teilweise flüssigen zweiten Mediums erfolgt, so dass das zweite Medium in einem gasförmigen Aggregatzustand dem Verdichter zugeführt werden kann und die Verdampfungswärme energetisch ausgenutzt wird. Zusätzlich oder alternativ zu einer vollständigen Verdampfung, kann je nach sich ergebender Temperaturdifferenz auch eine leichte Aufheizung des gasförmigen zweiten Mediums erfolgen.

Wird die Energie durch andere thermodynamische Verfahren bereitgestellt, so sind die Wahl des zweiten Mediums sowie die Druckbereiche bei der Verfahrensführung entsprechend anzupassen. Als besonders geeignet hat sich in diesem Zusammenhang Propan herausgestellt.

Grundsätzlich umfasst die Erfindung die Möglichkeit einer einstufigen oder einer mehrstufigen Kompression in dem Verdichter. Bei einer zweistufigen Verdichtung wird das zweite Medium nach einer ersten Kompression zurück in den Tank geführt, wodurch einerseits die Strömung beruhigt und andererseits mögliche im Zuge der Kompression entstandene Flüssigkeit abgeschieden werden kann. Das zweite Medium wird anschließend im gasförmigen Zustand einer zweiten Kompressionsstufe zugeführt. Möglich ist aber auch eine Ausgestaltungsvariante, bei der das zweite Medium lediglich in der ersten Kompressionsstufe verdichtet wird und ein weiteres Medium in der zweiten Kompressionsstufe genutzt wird, wobei zunächst ein Wärmeaustausch zwischen den beiden Medien im Vorfeld der zweiten Kompressionsstufe erfolgt.

In einer besonders bevorzugten Ausgestaltungsform der Erfindung wird das zweite Medium nicht unmittelbar für die Aufheizung des gasförmigen ersten Mediums in einem Eingangswärmetauscher verwendet, sondern überträgt seine Wärme zunächst in einem ersten Wärmetauscher an ein drittes Medium, wobei das dritte Medium anschließend zur Aufheizung des gasförmigen ersten Mediums in dem Eingangswärmetauscher verwendet wird. Vorzugsweise kommt als drittes Medium eine Flüssigkeit zum Einsatz, insbesondere Wasser.

Vorzugsweise zirkuliert das dritte Medium in einem geschlossenen Kreislauf. Hierzu lagert das dritte Medium zunächst in einem Tank und wird angetrieben über eine Pumpe dem Eingangswärmetauscher zugeführt. Das so abgekühlte dritte Medium wird anschließend in einem ersten Wärmetauscher erneut durch das zweite Medium erwärmt, bevor es anschließend erneut dem Tank zugeführt wird. Damit bereits bei der Inbetriebnahme der Expansionsturbine eine ausreichende Menge des aufgeheizten dritten Mediums vorliegt, kann das dritte Medium optional in dem zugeordneten Tank durch eine separate Heizung vorgewärmt werden.

Grundsätzlich umfasst die Erfindung auch die Möglichkeit, neben der Kompressionswärme und durch Wärmeaustausch gewonnenen Umgebungswärme auch weitere Abwärme, beispielsweise aus einem Ölkühler oder einem Generatorkühler, für den Aufheizprozess des dritten Mediums zu verwenden.

Besonders bevorzugt ist im Rahmen der Erfindung eine Ausgestaltungsform, bei der für die Energieumwandlung von Druckenergie in elektrische Energie ausschließlich die Druckenergie, die Umgebungswärme und gegebenenfalls. in dem Prozess selbst anfallende Abwärme genutzt wird. Dieses Verfahren lässt sich somit völlig autark und unabhängig betreiben, ohne dass hierfür eine Zufuhr von Energie von anderen thermodynamischen Prozessen notwendig ist.

Da als drittes Medium bevorzugt eine Flüssigkeit insbesondere Wasser verwendet wird, ist aufgrund der Siedetemperatur der Flüssigkeit die Temperaturdifferenz zwischen dem ersten Medium und dem dritten Medium begrenzt. Aus diesem Grunde wird in einer bevorzugten Ausgestaltung der Erfindung das erste Medium zunächst in einer ersten Stufe bis auf ein mittleres Druckniveau entspannt, anschließend erneut vorgewärmt und abschließend in einer zweiten Stufe bis auf einen Enddruck restentspannt. Hierdurch wird die mittlere Temperatur des ersten Mediums während der Entspannung hochgehalten, ohne dass ein besonders heißes drittes Medium zur Aufheizung des ersten Mediums erforderlich wäre. Hierbei wird auch für den zweiten Aufheizprozess vorzugsweise das dritte Medium verwendet. Grundsätzlich umfasst die Erfindung aber auch die Möglichkeit einer einstufigen Expansion, bei der ohne einen zwischengeschalteten zweiten Aufheizprozess direkt auf den Enddruck entspannt wird.

Gegenstand der Erfindung ist auch eine Expansionsturbinenanlage zur Durchführung des zuvor beschriebenen Verfahrens, wobei die Expansionsturbinenanlage eine Expansionsturbine und einen Generator bereitstellt, und die Expansionsturbine den Generator über ein Getriebe antreibt. Über das Getriebe ist die Expansionsturbine ferner mit einem Verdichter verbunden, welcher als Bestandteil einer Heizanordnung zur Verdichtung des zweiten Mediums vorgesehen ist und wobei die Heizanordnung einen Eingangswärmetauscher in einer Zuführung der Expansionsturbine zur Aufwärmung des ersten Mediums aufweist.

Die Erfindung umfasst auch das thermodynamische Verfahren zur Energieumwandlung von Druckenergie in elektrische Energie, wobei einer unter Druck stehendes Prozessgas zunächst vorgewärmt und anschließend entspannt wird, wobei die Druckenergie in mechanische und nachfolgend in elektrische Energie umgewandelt wird. Für das beschriebene Verfahren wird ein Teil der mechanischen Energie dazu genutzt, einen thermodynamischen Kreisprozess zu betreiben. In dem Kreisprozess wird zunächst ein flüssiges Heizmedium durch Zufuhr von äußerer Energie verdampft und anschließend im gasförmigen Zustand komprimiert.

Nach der Abkühlung und Kondensation des gasförmigen Heizmediums durch unmittelbare oder mittelbare Abgabe von Energie an das Prozessgas wird das Heizmedium gedrosselt, wodurch sich der Druck erneut reduziert, so dass das Kühlmedium erneut dem Kreisprozess zugeführt werden kann.

Gemäß einer Weiterbildung des thermodynamischen Kreisprozesses erfolgt die Abgabe der Wärme von dem Heizmedium nicht direkt an das Prozessgas, sondern dient der Aufheizung eines zweiten thermodynamischen Kreisprozesses. Für diesen zweiten thermodynamischen Kreisprozess wird zunächst ein flüssiges Übertragungsmedium bereitgestellt, das unter Zuführung von mechanischer Arbeit zirkuliert. Durch Abgabe von Wärmeenergie an das Prozessgas kühlt sich das Übertragungsmedium ab und wird anschließend durch Zufuhr von Wärmenergie von dem Heizmedium erneut aufgeheizt.

Nachfolgend wird die Erfindung anhand einer lediglich ein Ausführungsbeispiel darstellenden Zeichnung näher erläutert. Es zeigen:
- **Fig. 1**: ein erfindungsgemäßes Verfahren mit einem Prozessgas, einem Heizmedium und einem Übertragungsmedium,
- **Fig. 2**: ein erfindungsgemäßes Verfahren mit einem Prozessgas und einem Heißgas.

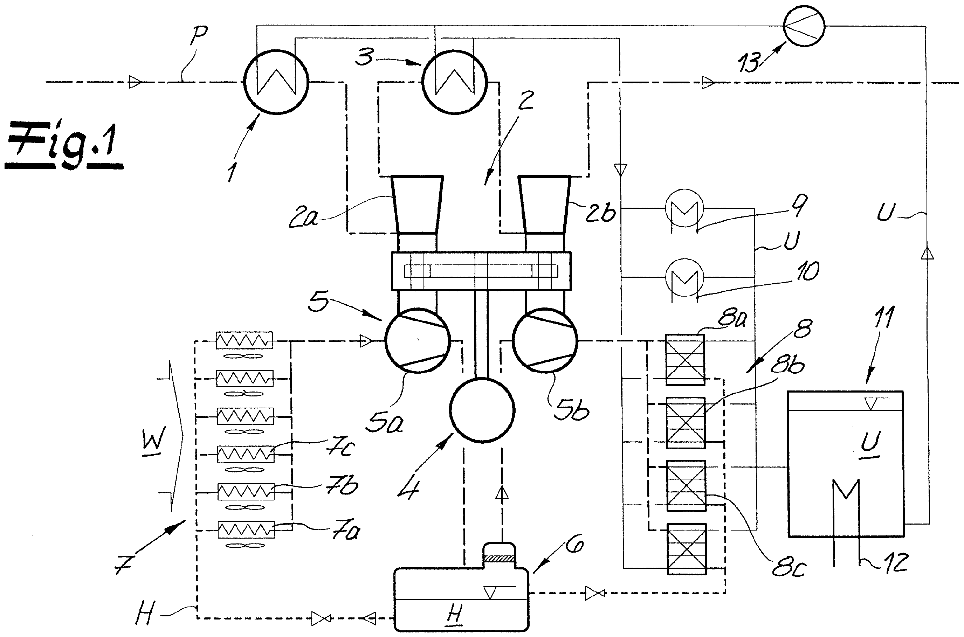

Die Fig. 1 zeigt schematisch ein Prozessschaltbild für das erfindungsgemäße Verfahren zur Energieumwandlung von Druckenergie in elektrische Energie.

Ein unter Druck stehendes Prozessgas P, beispielsweise Erdgas, wird als erstes Medium zunächst in einem Eingangswärmetauscher 1 aufgeheizt und anschließend in einer ersten Stufe 2a einer Expansionsturbine 2 bis auf ein mittleres Druckniveau entspannt. Im Anschluss daran erfolgt ein erneutes Aufheizen des Prozessgases P in einem Zwischenwärmetauscher 3. Abschließend erfolgt eine zweite Entspannung des Prozessgases P in einer zweiten Stufe 2b der Expansionsturbine 2.

Die durch die Expansionsturbine 2 gewonnene mechanische Energie wird dazu verwendet, über ein Getriebe einerseits einen elektrischen Generator 4 und andererseits einen eine erste Stufe 5a und eine zweite Stufe 5b umfassenden Verdichter 5 anzutreiben.

Ein Heizmedium H als zweites Medium wird in einem Heizmediumtank 6 bereitgestellt, wobei das Heizmedium H in dem Heizmediumtank 6 als zweiphasiges Gemisch flüssig/gasförmig vorliegt. Aus dem Heizmediumtank 6 wird das Heizmedium H in einem zumindest teilweise flüssigen Zustand entnommen und einer Verdampfungsanordnung 7 zugeführt. Die Verdampfungsanordnung 7 kann aus mehreren einzelnen Verdampfern 7a, 7b, 7c, ... bestehen, wobei die einzelnen Verdampfer 7a, 7b, 7c, ... parallel zueinander geschaltet sind. Zur Verdampfung des Heizmedium H eignet sich grundsätzlich jede Energiequelle, die gegenüber der Verdampfungstemperatur des Heizmediums H eine höhere Temperatur aufweist. In dem dargestellten Beispiel wird als Heizmedium H bevorzugt Propan eingesetzt, da Propan bereits bei sehr niedrigen Temperaturen verdampft, allerdings durch Kompression und Rückkühlung auf einfache Art und Weise in einen flüssigen Zustand zurückversetzt werden kann. Durch die niedrige Siedetemperatur von Propan kann einer Verdampfung allein unter Einwirkung der Umgebungswärme W erfolgen. Dies ist insbesondere dann vorteilhaft, wenn das beschriebene Verfahren in einer Anlage ausgeführt wird, die in einer Gegend mit besonders hohen Umgebungstemperaturen aufgestellt ist. Hierdurch kann neben der Verdampfung auch ein leichtes Aufheizen des nun gasförmigen Heizmediums H erfolgen.

Im Anschluss an die Verdampfung wird das Heizmedium H dem von der Expansionsturbine 2 angetriebenen Verdichter 5 zugeführt. Die Verdichtung erfolgt hierbei in zwei Stufen. In der ersten Stufe 5a wird das Heizmedium H auf ein mittleres Druckniveau verdichtet und anschließend erneut dem Heizmediumtank 6 zugeführt. Aufgrund der unterschiedlichen Dichteverhältnisse von flüssigem und gasförmigem Heizmedium H lagert sich der flüssige Anteil am Boden des Heizmediumtanks 6 und der gasförmige Anteil im Deckenbereich des Heizmediumtanks 6 ab.

Hierdurch kann je nach gewählter Entnahmestelle der Aggregatzustand des Heizmediums H ausgewählt werden. Durch eine Öffnung im Deckenbereich des Heizmediumtanks 6 wird das auf ein mittleres Druckniveau befindliche Heizmedium H erneut dem Heizmediumtank 6 entnommen und einer zweiten Kompressionsstufe 5b des Verdichters 5 zugeführt.

Das infolge des Druckaufbaus in der zweiten Stufe 5b aufgeheizte Heizmedium H wird anschließend einem ersten Wärmetauscher 8 zugeführt und die Wärme des Heizmedium H an das Übertragungsmittel U als drittes Medium übertragen.

Der erste Wärmetauscher 8 besteht hierzu aus mehreren geschalteten einzelnen Wärmetauschern 8a, 8b, 8c, .... Zusätzlich wird auch die Wärmeenergie einer Generatorkühlung 9 und die Wärmeenergie einer Ölkühlung 10 an das Übertragungsmedium U übertragen.

Auch das Übertragungsmedium U zirkuliert in einem geschlossenen Kreislauf und wird zunächst in einem Übertragungsmitteltank 11 gelagert. Da bei einer Inbetriebnahme der Expansionsturbine 2 noch kein aufgeheiztes Übertragungsmedium U vorliegt und folglich keine Vorwärmung des Prozessgases P erfolgen kann, ist der Übertragungsmitteltank 11 zusätzlich mit einer separaten Heizung 12 versehen, die das vorzugsweise flüssige Übertragungsmedium so lange auf die benötigte Temperatur vorheizt, bis die erforderliche Wärmemenge durch das komprimierte Heizmedium H bereitgestellt werden kann.

Als Übertragungsmedium U zur Vorheizung kommt in dem dargestellten Beispiel Wasser zum Einsatz, das mittels einer Pumpe 13 im flüssigen Zustand aus dem Übertragungsmitteltank 11 sowohl durch den Eingangswärmetauscher 1 als auch durch den Zwischenwärmetauscher 3 strömt. Der Eingangswärmetauscher 1 und der Zwischenwärmetauscher 3 sind hierzu parallel zueinander geschaltet. Denkbar ist aber auch eine Anordnung bei der der Eingangswärmetauscher 1 und der Zwischenwärmetauscher 3 in Reihe geschaltet sind.

Infolge der Wärmeübertragung kühlt sich das Übertragungsmedium U ab, wird anschließend sowohl durch die Kompressionswärme als auch durch die Wärme der Generatorkühlung 9 und der Ölkühlung 10 aufgeheizt und erneut dem Übertragungsmitteltank 11 zugeführt.

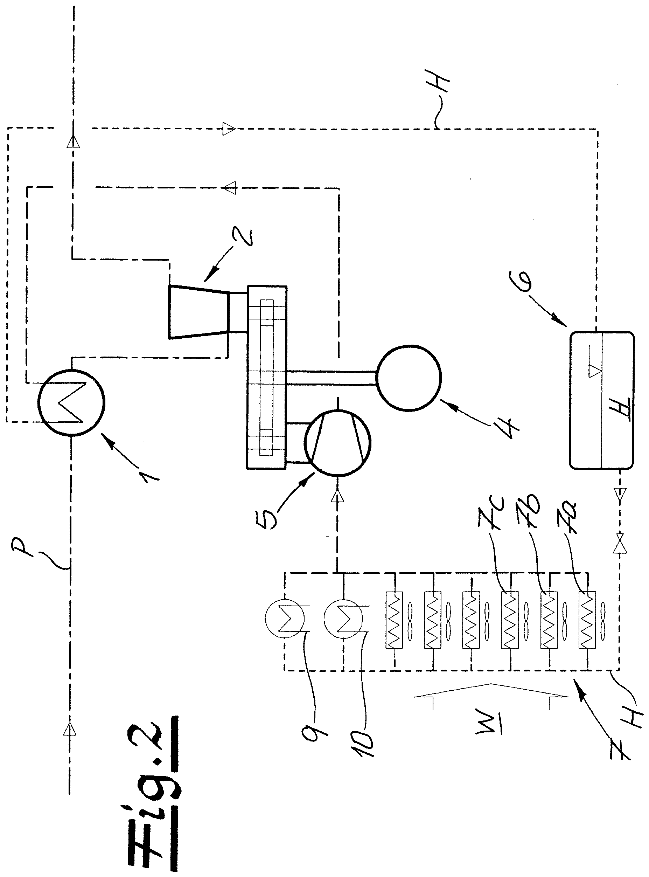

Die Fig. 2 zeigt schematisch ein Prozessschaltbild für das erfindungsgemäße Verfahren zur Umwandlung von Druckenergie in elektrische Energie bei einer nur einstufigen Entspannung in einer Expansionsturbine 2. Die Aufheizung des Prozessgases P erfolgt mittels des Eingangswärmetauschers 1, ein Zwischenwärmetauscher 3 wird aufgrund des einstufigen Prozesses nicht benötigt. Auch die Verdichtung des Heizmediums H erfolgt in nur einer Stufe des von der Expansionsturbine 2 angetriebenen Verdichters 5.

Das Heizmedium H als zweites Medium wird in einem Heizmediumtank 6 bereitgestellt, wobei auch hierbei das Heizmedium H als zweiphasiges Gemisch flüssig/gasförmig vorliegt. Ausgehend von einem zumindest teilweise flüssigen Zustand wird das Heizmedium H anschließend einer Verdampfungsanordnung 7 bestehend aus mehreren einzelnen Verdampfern 7a, 7b, 7c, ... zugeführt. Hierbei sind die einzelnen Verdampfer 7a, 7b, 7c, ... parallel zueinander geschaltet. Als Besonderheit gegenüber dem in Fig. 1 dargestellten Verfahren wird die Wärme der Generatorkühlung 9 und der Ölkühlung 10 direkt dazu genutzt, dass Heizmedium H zu verdampfen und aufzuheizen.

Nach Verdampfung in der Verdampfungsanordnung 7 wird das Heizmedium H in dem Verdichter 5 verdichtet und anschließend direkt dem Eingangswärmetauscher 1 zugeführt. Es erfolgt somit keine Wärmeübertragung an ein als zweites Medium gewähltes Übertragungsmedium U. In dem Eingangswärmetauscher 1 kühlt das Heizmedium H ab und kondensiert im weiteren Verlauf zumindest teilweise aus. In diesem Zustand wird das Heizmedium H erneut dem Heizmediumtank 6 zugeführt, so dass der Prozess erneut durchlaufen werden kann.

## Patentansprüche

1. Verfahren zur Energieumwandlung (2) von Druckenergie in elektrische Energie mit einer Expansionsturbine (2), wobei ein unter Druck stehendes gasförmiges erstes Medium vor der Zuleitung in die Expansionsturbine (2) aufgeheizt wird und die Expansionsturbine einen Generator (4) antreibt, wobei die Expansionsturbine (2) zusätzlich zu dem Generator (4) einen Verdichter (5) antreibt, wobei durch den Verdichter (5) in einer Heizanordnung zumindest ein gasförmiges zweites Medium komprimiert wird und die im Zuge der Kompression entstandene Wärme zur Aufheizung des gasförmigen ersten Mediums verwendet wird, **dadurch gekennzeichnet, dass**
die Heizanordnung einen geschlossenen Kreislauf aufweist, in dem das zweite Medium zirkuliert und ausgehend von einem Heizmediumtank (6) in einem zumindest teilweise flüssigen Zustand vorliegt.

2. Verfahren nach Anspruch 1, wobei das zweite Medium vor der Zuführung in den Verdichter (5) durch Einwirken von äußerer Wärme verdampft.

3. Verfahren nach Anspruch 2, wobei eine Umgebungstemperatur bestimmt wird, wobei das zweite Medium einem Wärmeaustausch mit der Umgebung zugeführt wird, wobei die Verdampfungstemperatur des zweiten Mediums unterhalb der Umgebungstemperatur liegt, so dass das zweite Medium durch Einwirken der Umgebungsenergie vorzugsweise vollständig verdampft wird.

4. Verfahren nach einem der Ansprüche 1 bis 3, wobei die Kompression zweistufig erfolgt.

5. Verfahren nach einem der Ansprüche 1 bis 4, wobei das zweite Medium in einem ersten Wärmetauscher (8) seine Wärme an ein drittes Medium überträgt, und das dritte Medium zum Aufheizen des gasförmigen ersten Mediums in einem Eingangswärmetauscher (1) verwendet wird.

6. Verfahren nach Anspruch 5, wobei das dritte Medium angetrieben von einer Pumpe (13) und ausgehend von einem Tank in einem geschlossenen Kreislauf zirkuliert.

7. Verfahren nach einem der Ansprüche 1 bis 6, wobei die Entspannung des gasförmigen ersten Mediums in zwei Stufen erfolgt, wobei das gasförmige erste Medium zwischen den beiden Stufen (2a, 2b) in einem Zwischenwärmetauscher (3) erneut vorgewärmt wird.

8. Verfahren nach einem der Ansprüche 1 bis 7, wobei für die Energieumwandlung von Druckenergie in elektrische Energie ausschließlich die Druckenergie, Umgebungswärme (W) und optional Abwärme des Verfahrens selbst genutzt werden.

9. Expansionsturbinenanlage zur Durchführung eines Verfahrens nach einem der Ansprüche 1 bis 8, umfassend eine Expansionsturbine (2), welche über ein Getriebe einen Generator (4) antreibt, wobei an das Getriebe ein Verdichter (5) angeschlossen ist, welcher als Bestandteil einer Heizanordnung zur Verdichtung des zweiten Mediums vorgesehen ist und dass die Heizanordnung einen Eingangswärmetauscher (1) in einer Zuführung der Expansionsturbine (2) zur Aufwärmung des ersten Mediums aufweist, **dadurch gekennzeichnet, dass** die Heizanordnung einen geschlossenen Kreislauf aufweist, in dem das zweite Medium zirkuliert und ausgehend von einem Heizmediumtank (6) in einem zumindest teilweise flüssigen Zustand vorliegt.

## Claims

1. Method for the energy conversion (2) of pressure energy into electrical energy using an expansion turbine (2), wherein a pressurized gaseous first medium is heated before being fed into the expansion turbine (2) and the expansion turbine drives a generator (4), wherein the expansion turbine (2) drives a compressor (5) in addition to the generator (4), wherein at least one gaseous second medium is compressed by the compressor (5) in a heating arrangement and the heat created during compression is used for heating the gaseous first medium, **characterized in that** the heating arrangement has a closed circuit in which the second medium circulates and is, starting from a heating medium tank (6), in an at least partially liquid state.

2. The method according to claim 1, wherein the second medium evaporates by the effect of external heat before being fed into the compressor (5).

3. The method according to claim 2, wherein an ambient temperature is determined, wherein the second medium is supplied to a heat exchange with the ambient area, wherein the evaporation temperature of the second medium is below the ambient temperature so that the second medium is preferably completely evaporated by the effect of the ambient energy.

4. The method according to one of claims 1 to 3, wherein the compression occurs in two stages.

5. The method according to one of claims 1 to 4, wherein the second medium transfers its heat to a third medium in a first heat exchanger (8) and the third medium is used for heating the gaseous first medium in an inlet heat exchanger (1).

6. The method according to claim 5, wherein the third medium is driven by a pump (13) and circulates starting from a tank in a closed circuit.

7. The method according to one of claims 1 to 6, wherein the expansion of the gaseous first medium occurs in two stages, wherein the gaseous first medium is pre-heated again between the two stages (2a, 2b) in an intermediate heat exchanger (3).

8. The method according to one of claims 1 to 7, wherein only the pressure energy, the ambient heat (W) and optionally waste heat of the method itself are used for the energy conversion of pressure energy into electrical energy.

9. Expansion turbine unit for carrying out a method according to one of claims 1 to 8, comprising an expansion turbine (2), which drives a generator (4) via a transmission, wherein a compressor (5) is connected to the transmission, the compressor being provided as a component of a heating arrangement for the compression of the second medium, and wherein the heating arrangement has an inlet heat exchanger (1) in a supply line of the expansion turbine (2) for heating the first medium, **characterized in that** the heating arrangement has a closed circuit in which the second medium circulates and is, starting from a heating medium tank (6), in an at least partially liquid state.

## Revendications

1. Procédé de conversion d'énergie (2) d'énergie de pression en énergie électrique avec une turbine d'expansion (2), dans lequel un premier fluide gazeux sous pression est chauffé avant d'être introduit dans la turbine d'expansion (2) et la turbine d'expansion entraîne un générateur (4), dans lequel la turbine d'expansion (2) entraîne un compresseur (5) en plus du générateur (4), dans lequel au moins un second fluide gazeux est comprimé par le compresseur (5) dans un agencement de chauffage et la chaleur générée au cours de la compression est utilisée pour chauffer le premier fluide gazeux, **caractérisé en ce que** l'agencement de chauffage présente un circuit fermé dans lequel le deuxième fluide circule et, à partir d'un réservoir de fluide chauffé (6), se présente dans un état au moins partiellement liquide.

2. Procédé selon la revendication 1, dans lequel le second fluide s'évapore avant d'être introduit dans le compresseur (5) sous l'action de la chaleur externe.

3. Procédé selon la revendication 2, dans lequel une température ambiante est déterminée, dans lequel le deuxième fluide est amené à un échange thermique avec l'environnement, dans lequel la température d'évaporation du deuxième fluide est inférieure à la température ambiante, de sorte que le deuxième fluide soit de préférence complètement évaporé sous l'action de l'énergie ambiante.

4. Procédé selon une quelconque des revendications 1 à 3, dans lequel la compression a lieu en deux étapes.

5. Procédé selon une quelconque des revendications 1 à 4, dans lequel le deuxième fluide dans un premier échangeur de chaleur (8) transfère sa chaleur à un troisième fluide, et le troisième fluide est utilisé pour chauffer le premier fluide gazeux dans un échangeur de chaleur d'entrée (1).

6. Procédé selon la revendication 5, dans lequel le troisième fluide est entraîné par une pompe (13) et circule en circuit fermé à partir d'un réservoir.

7. Procédé selon une quelconque des revendications 1 à 6, dans lequel la détente du premier fluide gazeux se fait en deux étapes, dans lequel le premier fluide gazeux entre les deux étages (2a, 2b) est à nouveau préchauffé dans un échangeur de chaleur intermédiaire (3) .

8. Procédé selon une quelconque des revendications 1 à 7, dans lequel exclusivement l'énergie de pression, la chaleur ambiante (W) et éventuellement la chaleur perdue du procédé lui-même sont utilisées pour la conversion d'énergie de l'énergie de pression en énergie électrique.

9. Système de turbine d'expansion pour mettre en œuvre un procédé selon une quelconque des revendications 1 à 8, comprenant une turbine d'expansion (2) qui entraîne un générateur (4) via une transmission, dans lequel un compresseur (5) est raccordé à la transmission, qui est prévu comme composant d'un agencement de chauffage pour comprimer le deuxième fluide et que l'agencement de chauffage présente un échangeur de chaleur d'entrée (1) dans une alimentation de la turbine d'expansion (2) pour réchauffer le premier fluide, **caractérisé en ce que** l'agencement de chauffage présente un circuit fermé, dans lequel le deuxième fluide circule et, à partir d'un réservoir de fluide chauffé (6), se présente dans un état au moins partiellement liquide.
